# EUROPEAN PATENT APPLICATION

(11) **EP 4 793 198 A1**
(43) Date of publication of application: **19.08.2026**
(21) Application number: 24881821.3
(22) Date of filing: 24.12.2024
(51) Int. Cl.: B65D 90/00, B65D 88/74, H01M 50/244, H01M 50/204, H01M 50/289

(54) **ENERGY STORAGE COMPARTMENT, ENERGY STORAGE DEVICE, ENERGY STORAGE SYSTEM AND CHARGING NETWORK**

(30) Priority: 24.10.2023 CN 202322858858 U; 08.04.2024 WO PCT/CN2024/086600; 08.04.2024 WO PCT/CN2024/086624; 09.07.2024 WO PCT/CN2024/104413; 09.07.2024 WO PCT/CN2024/104575; 19.07.2024 WO PCT/CN2024/106588; 12.08.2024 WO PCT/CN2024/111558; 15.08.2024 CN 202421984591 U; 15.08.2024 WO PCT/CN2024/112387; 15.08.2024 WO PCT/CN2024/112473; 15.08.2024 WO PCT/CN2024/112498; 15.08.2024 WO PCT/CN2024/112558; 24.10.2024 WO PCT/CN2024/127187
(71) Applicant: Contemporary Amperex Technology Co., Limited, Ningde, Fujian 352100 (CN)
(72) Inventor: ZHANG, Mingliang, Ningde, Fujian 352100 (CN); SU, Haibin, Ningde, Fujian 352100 (CN); PENG, Haoran, Ningde, Fujian 352100 (CN); LI, Zhonghong, Ningde, Fujian 352100 (CN)
(74) Representative: Kraus & Lederer PartGmbB
(86) International application number: PCT/CN2024/141956
(87) International publication number: WO 2025/087462

(57) **Abstract**

An energy storage compartment (100), an energy storage device, an energy storage system (2000) and a charging network (1000), wherein the energy storage compartment comprises a compartment body (10), a control module (30) and a plurality of energy units (2). The dimension of the compartment body in a height direction is less than the dimension of a standard container in the height direction, the dimension of the compartment body in a length direction thereof is consistent with the dimension of the standard container in the length direction, and the dimension of the compartment body in a width direction thereof is consistent with the dimension of the standard container in the width direction. The plurality of energy units are accommodated in the compartment body. The control module is accommodated in the compartment body, wherein the control module comprises a main control module (303), the main control module being used for performing electrical control on the plurality of energy units. The weight of the energy storage compartment is less than or equal to 45 tons.

## Description

This application claims priority to Chinese Patent Application No. PCT/CN2024/112473 filed on August 15, 2024, Chinese Patent Application No. PCT/CN2024/112498 filed on August 15, 2024, Chinese Patent Application No. PCT/CN2024/111558 filed on August 12, 2024, Chinese Patent Application No. PCT/CN2024/112387 filed on August 15, 2024, Chinese Patent Application No. 202421984591.6 filed on August 15, 2024, Chinese Patent Application No. PCT/CN2024/112558 filed on August 15, 2024, Chinese Patent Application No. PCT/CN2024/106588 filed on July 19, 2024, Chinese Patent Application No. PCT/CN2024/104575 filed on July 09, 2024, Chinese Patent Application No. PCT/CN2024/086624 filed on July 08, 2024, Chinese Patent Application No. PCT/CN2024/104413 filed on July 09, 2024, Chinese Patent Application No. 202322858858.9 filed on October 24, 2023, Chinese Patent Application No. PCT/CN2024/086600 filed on April 08, 2024, Chinese Patent Application No. PCT/CN2024/127187 filed on October 24, 2024, which is incorporated by reference in its entirety.

### TECHNCIAL FIELD

The present disclosure relates to the technical field of batteries, and particularly relates to an energy storage bin, an energy storage apparatus, an energy storage system, and a charging network.

### BACKGROUND

With the rapid development of technology, electric energy has become an indispensable energy source in people work and daily life. To ensure a smooth supply of electric energy to realize normal work and daily activities, energy storage bins are needed. As apparatuses for cyclically storing and releasing the electric energy, the energy storage bins can store the electric energy by charging or supply the stored electric energy to electrical apparatuses by discharging. The energy storage bins are widely used in the fields of industrial power supply, household power supply, temporary power supply, mobile power supply, wind power generation, solar power generation, energy storage power stations, etc.

In the development of the energy storage bins, besides improving their performance, how to reduce their use cost is also an issue that cannot be ignored. Therefore, how to reduce the use cost of the energy storage bins is a technical problem that continues to be relieved in energy storage technology.

### SUMMARY

In view of the above, the embodiments of the present disclosure are expected to provide an energy storage bin, an energy storage apparatus, an energy storage system, and a charging network, aiming to reduce the use cost of the energy storage bin.

To achieve above objective, in a first aspect, the embodiment of the present disclosure provides the energy storage bin, which includes:
a bin body of which a size in a height direction is less than that of a standard container in the height direction, the size in a length direction is consistent with that of the standard container in the length direction, and the size in a width direction is consistent with that of the standard container in the width direction; and
a plurality of energy units which are accommodated in the bin body; and
control modules which are accommodated in the bin body and include general control modules, the general control modules being configured to perform electrical control on the plurality of energy units;
the weight of the energy storage bin is less than or equal to 45 tons.

According to the energy storage bin provided by the embodiment of the present disclosure, the weight of the energy storage bin is controlled to be less than or equal to 45 tons, which is conducive to relieving the problem of overweight in transportation, and reducing the transportation cost of the energy storage bin, thereby reducing the use cost of the energy storage bin. Meanwhile, on the premise of meeting the transportation weight, the size of the bin body can be adjusted according to the requirement of energy density, thus being conducive to improving the flexibility of the capacity of the bin body to meet different requirements, for example, the size of the bin body can be made as large as possible, and the volume and electric quantity of the energy storage bin can be improved as much as possible, thus reducing the use cost of the energy storage bin. In addition, the control module and the plurality of energy units are arranged in the bin body, which is conducive to improving the integration level of the energy storage bin, and reducing the workload in field installation; and the energy storage bin can be independently used, or a plurality of energy storage bins are stacked together for use, thus improving the universality and application flexibility of the energy storage bin. In addition, the size of the bin body in the length direction is set to be consistent with the size of a standard container in the length direction, and the size of the bin body in the width direction is set to be consistent with the size of the standard container in the width direction, which is conducive to facilitating compatibility with transportation tools and lifting appliances of existing standard containers, and reducing the transportation cost of the energy storage apparatus, thereby reducing the use cost of the energy storage bin.

In some embodiments, the size of the bin body in the height direction is greater than or equal to one third of the size of the standard container in the height direction.

The size of the bin cannot be infinitely small, and when the size of the bin body in the first direction is greater than or equal to one third of the size of the standard container in the first direction, the energy storage apparatus is high in manufacturability, high in volume energy density, and more convenient to transport and mount; and it is conducive to relieving the problem of overweight in transportation, and reducing the transportation cost of the energy storage bin, thereby decreasing the use cost of the energy storage bin.

In some embodiments, the size of the bin body in the height direction is greater than or equal to one half of the size of the standard container in the height direction.

When the size of the bin body in the height direction is greater than or equal to half of the size of the standard container in the height direction, the energy storage apparatus is high in manufacturability, high in volume energy density, and more convenient to transport and mount; and it is conducive to relieving the problem of overweight in transportation, and reducing the transportation cost of the energy storage bin, thereby decreasing the use cost of the energy storage bin. For example, when the energy storage apparatus includes two stacked energy storage bins, the size of each bin body in the height direction is greater than or equal to half of the size of the standard container in the height direction. After two bin bodies are stacked, the height is greater than that of one standard container, but the weight of each energy storage bin accommodating the energy units and other parts is low, each energy storage bin of the energy storage apparatus can be transported independently; and after the energy storage bins are stacked in site, the electric quantity of the energy storage apparatus is high.

In some embodiments, the size of the bin body in the height direction is greater than or equal to one third of the size of the standard container in the height direction, and is less than half of the size of the standard container in the height direction.

When the size of the bin body in the height direction is greater than or equal to one third of the size of the standard container in the height direction, and is less than half of the size of the standard container in the height direction, the energy storage apparatus is high in manufacturability, high in volume energy density, and more convenient to transport and mount. For example, when the energy storage apparatus includes three stacked energy storage bins, the size of each energy storage bin in the height direction is greater than or equal to one third of the size of the standard container in the height direction and is less than half of the size of the standard container in the height direction. After the three energy storage bins are stacked, the height is greater than that of one standard container, but the weight of each energy storage bin is low, each energy storage bin can be independently transported; and after the energy storage bins are stacked in site, the electric quantity of the energy storage apparatus is high.

In some embodiments, the heights of the bin bodies is h, 850mm ≤ h < 2896mm.

In the embodiments, the height of the bin body is set to be 850mm ≤ h < 2896mm, which is conducive to controlling the total weight of the energy storage bin to be not greater than 45 tons; and moreover, the size of the bin can be adjusted according to the requirement for energy density, thus further reducing the use cost of the energy storage bin.

In some embodiments, 1300mm ≤ h ≤ 2400mm.

In the embodiments, the height of the bin body is set to be 1300mm ≤ h ≤ 2400mm, which is conducive to controlling the total weight of the energy storage bin to be not greater than 45 tons; and moreover, the size of the bin can be adjusted according to the requirement for energy density, thus further reducing the use cost of the energy storage bin.

In some embodiments, the energy storage bin includes thermal management modules, and the thermal management modules are accommodated in the bin body and is configured to manage temperatures of the plurality of energy units in the energy storage bin.

In the embodiments, the thermal management modules are arranged and can manage temperatures of the energy units, thus reducing the risk of temperature runaway of the energy units. In addition, the thermal management module is arranged in the bin body, which is conducive to improving the integration level of the energy storage bin, and reducing the workload in field installation; and the energy storage bin can be independently used, or a plurality of energy storage bins are stacked together for use, thus improving the universality and application flexibility of the energy storage bin.

In some embodiments, the bin bodies are internally provided with energy bins and control bins, the energy bins are configured to accommodate the plurality of energy units, and at least some of the control modules and/or at least some of the thermal management modules are accommodated in the control bins.

In the embodiments, the bins are internally provided with the energy bins and the control bins, and at least some of the control modules and/or at least some of the thermal management modules are arranged in the bin bodies, so that the spaces in the bin bodies can be fully utilized, which further increases the space utilization rate of the bin bodies.

In some embodiments, at least some of the control bins and energy bins are arranged in the height direction of the bin bodies; and/or,
at least some of the control bins and energy bins are arranged in the length direction of the bin bodies.

The control bins are arranged above the energy bins, and therefore, the parts in the control bins can block the thermal radiation at the top to reduce the influence of the thermal radiation on the inside of the energy bins.

By arranging the control bins at the end portions of the bin bodies, the spaces in the bin bodies can be utilized to the maximum, and in addition, the control bins and the energy bins can be arranged closer, which is conducive to improving the structural compactness.

In some embodiments, the thermal management modules are located on the top of the bin body; or, the thermal management modules and the energy bins are arranged in the length direction of the bin body.

In the embodiments, the thermal management modules are located on the tops of the bin bodies, and upper portions of the thermal management modules are not shielded by shielding objects, which facilitates heat dissipation of the thermal management modules, thereby prolonging the service life of the energy storage apparatus. Moreover, the overall height of center of gravity of the energy storage bin can be reduced, thus improving the transportation safety. In addition, it is designed to be separated from the energy bins, thus the heat preservation and insulation effects of the energy bins can be improved; and moreover, the thermal management modules shield the heat radiation at the top, so that the influence of the heat radiation on the interiors of the energy bins can be reduced.

The thermal management modules are arranged at end portions of the bin bodies, so that the spaces in the bin bodies are utilized to the maximum.

In some embodiments, the control modules and the energy bins are arranged in the height direction of the bin bodies; and/or,
the control modules and the energy bins are arranged in the length direction of the bin bodies.

That is, the control modules can be arranged at left ends or right ends of the energy bins, or arranged between two energy bins in the length direction.

The control modules can be located above the energy bins, or below the energy bins, or between two energy bins in the height direction.

In some embodiments, the control modules and the thermal management modules are arranged in the height direction of the bin bodies; and/or,
the control modules and the thermal management modules are arranged in the length direction of the bin bodies; and/or,
the control modules and the thermal management modules are arranged in the width direction of the bin body, and the thermal management modules are arranged on front sides of the control modules; and/or,
the thermal management modules are arranged on the tops of the energy bins, and the control modules are arranged at the bottoms of the energy bins.

The thermal management modules are located on the tops of the control modules, and upper portions of the thermal management modules are not shielded by shielding objects, which facilitates heat dissipation of the thermal management modules. The thermal management modules are separated from the control modules by separators, the separators can separate the thermal management modules from the control modules, thus reducing the interference of the thermal management modules on the control modules, that is, the electromagnetic interference of a high-voltage line on low voltage can be reduced, and the influence of external rainfall or exposure to intensive sunlight on the control modules can also be reduced.

In the embodiments, the thermal management modules are arranged on the front sides of the control modules, namely, the thermal management modules are arranged on a side of the bin body close to a battery bin door, and a water port of a heat exchange pipeline is arranged on the side of the bin body close to the battery bin door, therefore, the connection between the thermal management modules and the heat exchange pipeline is facilitated, the number of elbows for the heat exchange pipeline can be reduced, further, the flow resistance is reduced, and the temperature control effect of the thermal management modules is improved.

In some embodiments, the bin bodies include the separators;
the separators are arranged between the energy bins and the control bins, and the energy bins and the control bins share the separators; and/or,
a plurality of control bins are provided, the separators are arranged between adjacent control bins, and the adjacent control bins share the separators.

The thermal management modules and the control modules are separated by the separators, and the separators can separate the thermal management modules from the control modules, so that the interference of the thermal management modules to the control modules can be reduced, namely, the electromagnetic interference of the high-voltage line to low voltage can be reduced, and the influence of external rainfall or exposure to intensive sunlight on the control modules can be reduced.

In some embodiments, the separators are filled with heat insulation media.

The heat insulation media are beneficial to improving the structural strength of the separators, can also achieve the effects of flame retardance and heat preservation, thus reducing the heat loss of the energy bins and the influence of external heat on the energy units in the energy bins.

In some embodiments, a first bin door is arranged on at least one side of the energy bins in the width direction, and a second bin door is arranged on at least one side of the control bins in the width direction.

In the embodiments, it helps reduce the land wastage caused by the traditional requirement to leave a maintenance channel of over 3 m between adjacent bin bodies, only a normal maintenance channel for paint repair is needed to be reserved between matts-shaped bin bodies, which improves the land investment returns of the users and increases the energy yield per unit area for the users.

In some embodiments, ventilation openings are formed in top walls and/or side walls of the bin bodies, and the ventilation openings are configured to perform ventilation on the thermal management modules.

In the embodiments, the ventilation openings are formed in the top walls of the bin bodies, which facilitates the heat dissipation of the thermal management modules, and more heat dissipation channels can be provided for the thermal management modules, thereby improving the temperature control effect of the thermal management modules.

In some embodiments, the energy storage bin includes a plurality of battery apparatuses, each battery apparatus including a thermal management part and the plurality of energy units; and the thermal management parts are configured to regulate the temperatures of the energy units;
the thermal management modules communicate with the plurality of thermal management parts through liquid cooling pipelines, the liquid cooling pipelines include main pipelines and a plurality of branch pipelines, the plurality of branch pipelines are connected to the main pipelines in parallel, the main pipelines communicate with the thermal management modules, and the plurality of branch pipelines communicate with the plurality of thermal management parts respectively; and the main pipelines are located above the plurality of battery apparatuses, or, below the plurality of battery apparatuses.

The main pipelines are arranged above the plurality of battery apparatuses, or, below the plurality of battery apparatuses, which is conducive to shortening the liquid cooling pipelines, thereby reducing the cost, and improving the cooling efficiency.

In some embodiments, each control module further includes at least one of a main control module, a power distribution module, and a fire control module.

The main control modules are configured to control the input and output of high-voltage electric energy of the energy units in the bin bodies. The general control modules are configured to control an on-off action of the main control modules in the bin bodies. The fire control modules are configured to control fire elements to act when a fire occurs due to temperature imbalance in the bin bodies, and the fire elements can be fire extinguishers and the like and can be arranged in the bin bodies. The power distribution modules are configured to electrically connect the main control modules, the general control modules, and the fire control modules, so as to facilitate the connection of circuits of the main control modules, the general control modules, and the fire control modules as well as the normal operation of the main control modules, the general control modules, and the fire control modules.

In some embodiments, the weight of the energy storage bin is M, the total weight of energy units in the bin bodies is M1, (M1/M) × 100% ≥ 60%.

In this way, on one hand, the weight ratio of the energy units in the bin bodies per unit volume can be increased, thus increasing the electric quantity of the energy storage apparatus per unit volume; on the other hand, during the transportation of the energy storage bin, more energy units which contribute to energy storage capacity and are high in production difficulty and cannot be produced at a destination are transported, while other structures can be produced at a place closer to the destination without transportation or with reduced transportation; and after the bins are assembled into the energy storage bin, the transportation cost of the assembled energy storage bin is reduced.

In some embodiments, (M1/M) × 100% ≥ 80%.

Therefore, the transportation cost of the assembled energy storage bin is further reduced.

In some embodiments, the weight of the energy storage bin is M; the plurality of battery apparatuses are arranged in the bin bodies, each including a box and the plurality of energy units; the plurality of energy units are accommodated in the box; and the total weight of the battery apparatuses is M2, 70% ≤ (M2/M) × 100% ≤ 90%.

The energy density of the energy storage bin and the structural strength of the bin bodies can be balanced, thus improving the practicability of the bin bodies.

In some embodiments, volumes of the bin bodies are V, the total volume of the energy units in the bin bodies is V1, (V1/V) × 100% ≥ 30%.

On one hand, the volume proportion of the energy units in the bin bodies per unit volume can be increased, thus increasing the electric quantity of the energy storage apparatus per unit volume; on the other hand, during the transportation of the energy storage apparatus, more energy units which contribute to energy storage and are high in production difficulty and cannot be produced at the destination are transported, while other functional elements such as control elements of the energy storage bin can be produced at the place closer to the destination without transportation or with reduced transportation; and after the bins are assembled into the energy storage bin, the transportation cost of the assembled energy storage bin is reduced.

In some embodiments, (V1/V) × 100% ≥ 50%.

The transportation cost of the assembled energy storage apparatus is further reduced.

In some embodiments, the volumes of the bin bodies are V; the plurality of battery apparatuses are arranged in the bin bodies, each including the box and the plurality of energy units; the plurality of energy units are accommodated in the box; and the total volume of the battery apparatuses is V2, 50% ≤ (V2/V) × 100% ≤ 80%.

The energy density of the energy storage apparatus and the structural strength of the bin bodies can be balanced, thus improving the practicability of the bin bodies.

In some embodiments, the energy of the energy storage bin is E, the sizes of the bin bodies in the length direction are a, the sizes of the bin bodies in the width direction are b, 250KW/*m* ² ≤ E/(a × b) ≤ 700KW/*m* ².

The energy density of the energy storage bin and the mass settings of the bin bodies are balanced, thus improving the practicability of the energy storage bin and facilitating the transportation of the energy storage bin.

In some embodiments, 450KW/*m* ² ≤ E/(a × b) ≤ 600KW/*m* ².

The energy density of the energy storage bin and the mass settings of the bin bodies can be further improved, thus facilitating the transportation of the energy storage bin.

In some embodiments, the standard containers are 20-chi standard containers, with the heights of 2,896 mm, 2,591 mm or 2,438 mm.

In some embodiments, the energy units are battery cells, and the weight of a single energy unit is 5-60 kg.

The energy units have proper weight, so that a proper amount of energy units can be accommodated in the bin bodies, and the energy density is moderate while the transportation requirements are met.

The embodiment of the present disclosure further provides an energy storage apparatus; the energy storage apparatus includes a plurality of above energy storage bins which are arranged in the height direction, the length direction and/or the width direction; and each energy storage bin includes the general control module.

The embodiment of the present disclosure further provides the energy storage system which includes a power conversion apparatus and the above energy storage apparatus, and the power conversion apparatus is configured to electrically connect a power generation apparatus with the energy storage apparatus.

The embodiment of the present disclosure further provides the charging network which includes a charging pile and the above energy storage apparatus or the above energy storage system, and the energy storage apparatus is configured to provide electric energy for the charging pile.

### BRIEF DESCRIPTION OF THE DRAWINGS

FIG. 1 is a schematic structural diagram of a charging network provided by some embodiments of the present disclosure;
FIG. 2 is a schematic structural diagram of an energy storage system provided by some embodiments of the present disclosure;
FIG. 3 is a schematic structural diagram of an energy storage bin provided by some embodiments of the present disclosure;
FIG. 4 is a local schematic structural diagram of an energy storage bin provided by some embodiments of the present disclosure;
FIG. 5 is a layout diagram of an energy storage bin provided by some embodiments of the present disclosure;
FIG. 6 is a schematic structural diagram of an energy storage bin provided by some embodiments of the present disclosure;
FIG. 7 is a schematic structural diagram of an energy storage bin provided by some embodiments of the present disclosure;
FIG. 8 is a schematic structural diagram of an energy storage bin provided by some embodiments of the present disclosure;
FIG. 9 is a schematic structural diagram of an energy storage bin provided by some embodiments of the present disclosure;
FIG. 10 is a schematic structural diagram of an energy storage bin provided by some embodiments of the present disclosure;
FIG. 11 is a schematic structural diagram of an energy storage bin provided by some embodiments of the present disclosure;
FIG. 12 is a schematic structural diagram of an energy storage bin provided by some embodiments of the present disclosure;
FIG. 13 is a schematic structural diagram of an energy storage bin provided by some embodiments of the present disclosure;
FIG. 14 is a schematic structural diagram of an energy storage bin provided by some embodiments of the present disclosure;
FIG. 15 is a schematic structural diagram of a control module provided by some embodiments of the present disclosure;
FIG. 16 is a schematic structural diagram of a battery apparatus provided by some embodiments of the present disclosure.

### Reference numerals

1000, charging network; 2000, energy storage system; 100, energy storage bin; 10, bin body; 101, separator; 102, first bin door; 103, second bin door; 2, energy unit; 3, first connector; 4, second connector; 11, energy bin; 12, control bin; 13, ventilation opening; 20, thermal management module; 30, control module; 301, main control module; 302, power distribution module; 303, general control module; 304, fire control module; 50, connecting wire harness; 51, high-voltage wire harness; 52, low-voltage wire harness; 80, battery apparatus; 81, box; 811, first box body; 812, second box body; 82, thermal management part; 90, liquid cooling pipeline; 91, main pipeline; 92, branch pipeline; 200, charging pile; 300, power conversion apparatus; and 3000, power generation apparatus.

### DETAILED DESCRIPTION

Unless otherwise specified, all embodiments of the present disclosure and optional embodiments may be combined with each other to form a new technical solution.

Unless otherwise specified, all the technical features of the present disclosure and optional technical features may be combined with each other to form a new technical solution.

With the development of clean energy, electric energy is used as driving power in more and more devices, leading to the rapid development of power batteries that can store a large amount of electric energy and be subjected to multiple cycles of charging and discharging, such as lithium-ion batteries. Power batteries are not only used in energy storage power systems such as hydropower, thermal power, wind power and solar power stations, but also widely used in electric vehicles such as electric bicycles, electric motorcycles, and electric vehicles, as well as aerospace and other fields.

In the embodiments of the present disclosure, energy units can be secondary batteries, which refer to energy units that active materials can be activated by charging for continuous used after discharging.

The energy unit may be a lithium ion battery, a sodium ion battery, a sodium-lithium ion battery, a lithium metal battery, a sodium metal battery, a lithium-sulfur battery, a magnesium ion battery, a nickel-hydrogen battery, a nickel-cadmium battery, a lead storage battery and the like, which is not limited in the embodiments of the preset disclosure.

The energy unit generally includes an electrode assembly. Only as an example, an electrode assembly includes a positive electrode, a negative electrode, and a separator, and the separator is arranged between the negative electrode and the positive electrode. In the charging and discharging process of the energy unit, active ions (such as lithium ions) are intercalated and de-intercalated between the positive electrode and the negative electrode in a reciprocating manner. The spacer is arranged between the positive electrode and the negative electrode, may play a role in preventing the positive electrode and the negative electrode from being short-circuited, and may enable active ions to pass through.

In some embodiments, the positive electrode may be a positive electrode plate, and the positive electrode plate may include a positive electrode current collector and a positive electrode active material arranged on at least one surface of the positive electrode current collector.

As an example, the positive electrode current collector has two surfaces opposite to each other in the thickness direction thereof, and the positive electrode active material is arranged on either or both of the two opposite surfaces of the positive electrode current collector.

As an example, a positive electrode current collector can be prepared from a metal foil, a conductive polymer material, or a carbon material or can be a composite current collector. For example, the positive electrode current collector is prepared from the metal foil, which can be a pure metal, an alloy, and a surface-treated metal, including but not limited to stainless steel, copper, aluminum, nickel, titanium or silver and the like. The composite current collector may include a high molecular material substrate and a metal layer. The composite current collector may be formed by forming a metal material (such as aluminum, aluminum alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

As an example, the positive electrode active material may include at least one of a group consisting of following materials: lithium-containing phosphate, lithium transition metal oxide and modified compounds thereof. However, there is no limitation on the materials in the present disclosure, and other traditional materials that can be used as the positive electrode active materials of the battery can also be used.

In some embodiments, the negative electrode may be a negative electrode plate, and the negative electrode plate may include a negative electrode current collector.

As an example, a negative electrode current collector can be prepared from a metal foil, a conductive polymer material, or a carbon material or can be a composite current collector. For example, the positive electrode current collector is prepared from the metal foil, which can be a pure metal, an alloy and a surface-treated metal, including but not limited to stainless steel, copper, aluminum, nickel, titanium or silver and the like. The composite current collector may include a high molecular material substrate and a metal layer. The composite current collector may be formed by forming a metal material (such as copper, copper alloy, nickel, nickel alloy, titanium, titanium alloy, silver, and silver alloy) on a high molecular material substrate (such as a substrate of polypropylene, polyethylene terephthalate, polybutylene terephthalate, polystyrene, or polyethylene).

As an example, the negative electrode plate can include a negative electrode current collector and a negative electrode material layer arranged on at least one surface of the negative electrode current collector.

In some embodiments, the material of the positive electrode current collector may be aluminum, and the material of the negative electrode current collector may be copper.

In some embodiments, the electrode assembly further includes a spacer, and the spacer is arranged between the positive electrode and the negative electrode.

In some implementations, the separator is a separator film. The type of the separator film is not particularly limited in the present disclosure and any well-known separator film of a porous structure having good chemical stability and mechanical stability may be selected.

As an example, the main material of the separator film may be selected from at least one of glass fiber, non-woven fabric, polyethylene, polypropylene, polyvinylidene fluoride, and ceramic. The separator film can be either a single-layer thin film or a multi-layer composite thin film without special limitations. When the separator film is a multi-layer composite film, the materials of the layers can be the same or different, which is not particularly limited. The separator may be an independent component positioned between the positive electrode and the negative electrode, or may be attached to the surfaces of the positive electrode and the negative electrode. A surface of a separator can be coated with an inorganic particle coating, an organic particle coating, or an organic/inorganic composite coating.

In some embodiments, the spacer is a solid electrolyte. The solid electrolyte is arranged between the positive electrode and the negative electrode and plays a role in transmitting ions and isolating the positive electrode and the negative electrode.

In some embodiments, the energy unit further includes an electrolyte, and the electrolyte plays a role in conducting ions between the positive electrode and the negative electrode. There is no special limitation on the type of the electrolyte in the present disclosure, and it can be selected according to requirements. The electrolyte can be liquid, gel or solid.

The electrode assembly can be of a winding structure, a stacking structure, or a hybrid structure of winding and stacking.

In some embodiments, the electrode assembly is of a winding structure. The positive electrode plate and the negative electrode plate are wound into the wound structure.

In some implementations, the electrode assembly is of a laminated structure.

As an example, a plurality of positive plates and a plurality of negative plates may be provided, and the plurality of positive plates and the plurality of negative plates are alternately stacked.

As an example, a plurality of positive electrode plates may be provided, and the negative electrode plates are folded to form a plurality of stacked folded segments, with one positive electrode plate sandwiched between adjacent folded segments.

As an example, both the positive electrode plate and the negative electrode plate are folded to form a plurality of stacked folded segments.

As an example, a plurality of separators may be provided and arranged between any adjacent positive electrode plates or negative electrode plates.

For example, the spacers can be continuously arranged between any adjacent positive electrode plates or negative electrode plates by folding or winding.

In some implementations, the electrode assembly may be cylindrical, flat, polyprismatic, or the like.

In some embodiments, the electrode assembly is provided with a tab, and the tab may lead current out of the electrode assembly. The tab includes a positive electrode tab and a negative electrode tab.

In some embodiments, the energy units can include shells. The shells can be steel shells, aluminum shells, plastic shells (such as polypropylene), composite metal shells (such as copper-aluminum composite shells) or aluminum-plastic films and the like. In some embodiments, the shells can be of a sealed structure or a non-sealed structure. As an example, when the shell is a non-sealed structure, the shell can protect the electrode assembly. A sealing bag is also included between the shell and the electrode assembly, and the sealing bag is used to encapsulate the electrode assembly and the electrolyte. Specifically, a sealing bag can be a bag-shaped insulation member or an aluminum-plastic film. The shells of the sealed structure are used for packaging the electrode assembly, the electrolyte and the like.

As an example, the energy units can be cylindrical energy units, prismatic energy units, soft package energy units or energy units in other shapes; the prismatic energy units include a square-shell energy unit, a blade-shaped energy unit, and a polygon-prism battery; and the polygon-prism battery is a hexagonal battery and the like, which is not particularly limited in the present disclosure.

In some embodiments, the shells include end covers and shell bodies, the shell bodies are provided with openings, and the end covers cover the openings. The shell bodies can be provided with one or more openings. One or a plurality of end covers may also be provided.

In some embodiments, the shells are provided with at least one electrode terminal which is electrically connected to the tab. The electrode terminals can be directly connected to the tabs and can also be indirectly connected to the tabs through current collecting components. The electrode terminals can be arranged on the end cover or the shell.

In some embodiments, the energy storage apparatus includes an energy storage bin and the like.

The requirement of a power station for the area energy density of the energy storage apparatus is increasing, and in order to increase the electric quantity, the total weight of bins and parts in the bin bodies will be correspondingly increased. The energy storage bin is transported to a destination from a production place by land and/or sea, there is a weight limit in transportation by land and sea generally, leading a conflict between the increased energy density and the weight of the energy storage bin.

In view of this, the embodiments of the present disclosure provide a new technical solution, which is suitable for the energy storage apparatus, an energy storage system and a charging network including the energy storage apparatus.

The energy storage can be used for an energy storage power station, a wind power generation system, a solar power generation system, a mobile power system or a temporary power supply system and the like. Energy storage apparatuses can store electric energy as needed and output it at the appropriate time. For example, energy storage apparatuses can store electric energy during low electricity consumption periods and provide electric energy to relevant users or electrical devices during peak electricity consumption periods. The energy storage system provided by the embodiment of the present disclosure can be any electrical power system needing the energy storage apparatus.

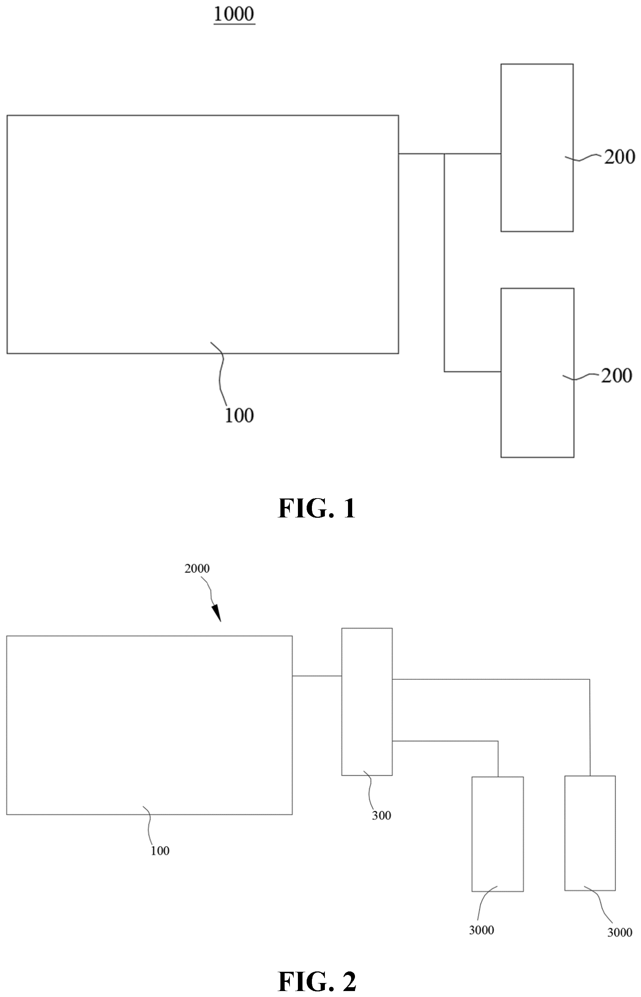

With reference to FIG. 1, FIG. 1 is a schematic structural diagram of a charging network provided by an embodiment of the present disclosure. The embodiment of the present disclosure provides the charging network 1000, and the charging network 1000 includes a charging pile 200 which is configured to charge an electrical device. The charging network 1000 can further include an energy storage bin 100, an energy storage apparatus or an energy storage system 2000, and the energy storage apparatus is electrically connected to the charging pile 200 and is configured to provide electric energy for the charging pile 200.

It is to be noted that the charging pile 200 is electrically connected to an energy unit 2 in the energy storage apparatus through a cable, and the energy unit 2 can provide the stored electric energy for the charging pile 200. The charging pile 200 is provided with one or more connectors, and the connectors are connected to the electrical device (such as a vehicle) so that energy can be supplemented to the electrical device. The charging network 1000 applies the energy storage apparatus, thus the reliability of the charging network 1000 can be effectively improved, and the deployment flexibility of the charging network 1000 can be improved.

The energy storage apparatus can be located inside the charging pile 200 (such as a storage and charging all-in-one machine) or outside the charging pile 200.

In one charging network 1000, one charging pile 200 can be provided, and the energy storage apparatus provides the electric energy for the one charging pile 200; and a plurality of charging piles 200 can be provided, and the energy storage apparatus provides electric energy for the plurality of charging piles 200.

The energy storage apparatus can include at least one energy storage bin 100, and the energy storage bin 100 includes a bin body 10, a control module 30, and a plurality of energy units 2; the plurality of energy units 2 are accommodated in the bin body 10 and are electrically connected to a charging pile 200 so as to provide electric energy for the charging pile 200.v

As an example, as shown in FIG. 1, the charging network 1000 includes one energy storage apparatus and two charging piles 200, and the one energy storage apparatus provides electric energy for the two charging piles 200.

With reference to FIG. 2, FIG. 2 is a schematic structural diagram of the energy storage system 2000 provided by an embodiment of the present disclosure. The embodiment of the present disclosure provides the energy storage system 2000. The energy storage system 2000 includes a power conversion apparatus 300, and the power conversion apparatus 300 can be electrically connected to a power generation apparatus 3000 and the energy storage apparatus so as to convert electric power provided by the power generation apparatus 3000. The power conversion apparatus 300 performs power conversion on the electric energy provided by the power generation apparatus 3000 and then stores in the energy storage apparatus.

The power conversion apparatus 300 is connected between the power generation apparatus 3000 and the energy storage apparatus. The power generation apparatus 3000 is configured to generate the electric energy, and is also configured to store the generated electric energy in the energy storage apparatus through the power conversion apparatus 300. The energy storage system 2000 applies the energy storage apparatus, and thus the operation reliability of the energy storage system 2000 can be effectively improved. In specific embodiment, the power generation device can be particularly a solar panel, a hydroelectric power generation device, a thermal power generation device and the like. The specific type of the power generation device is not limited in the present disclosure.

As an example, as shown in FIG. 2, the energy storage system 2000 includes the energy storage apparatus and the power conversion apparatus 300, the two power generation apparatuses 3000 transmit the generated electric energy to the power conversion apparatus 300, and the power conversion apparatus 300 stores the electric energy in the energy storage apparatus.

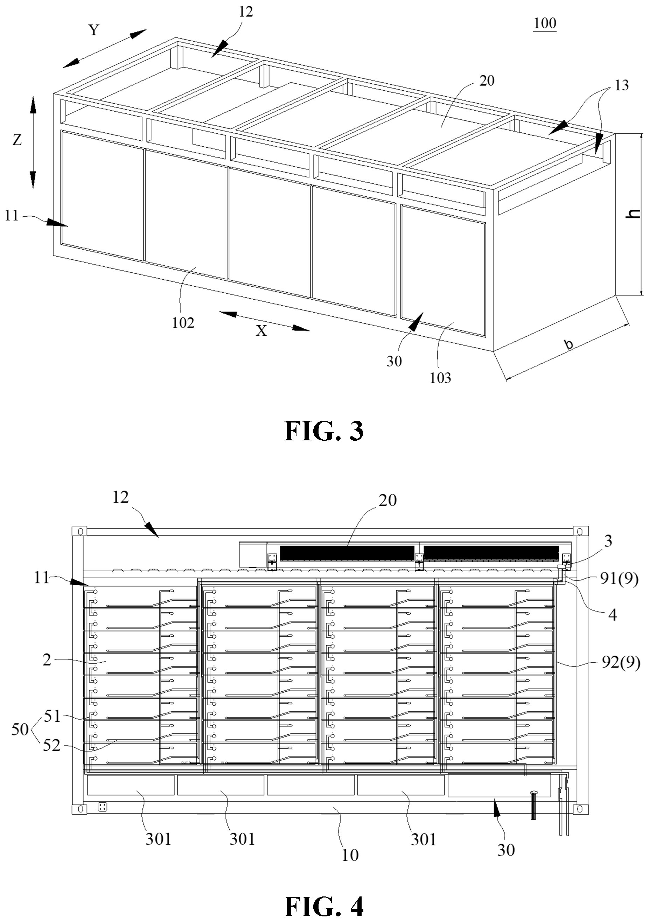

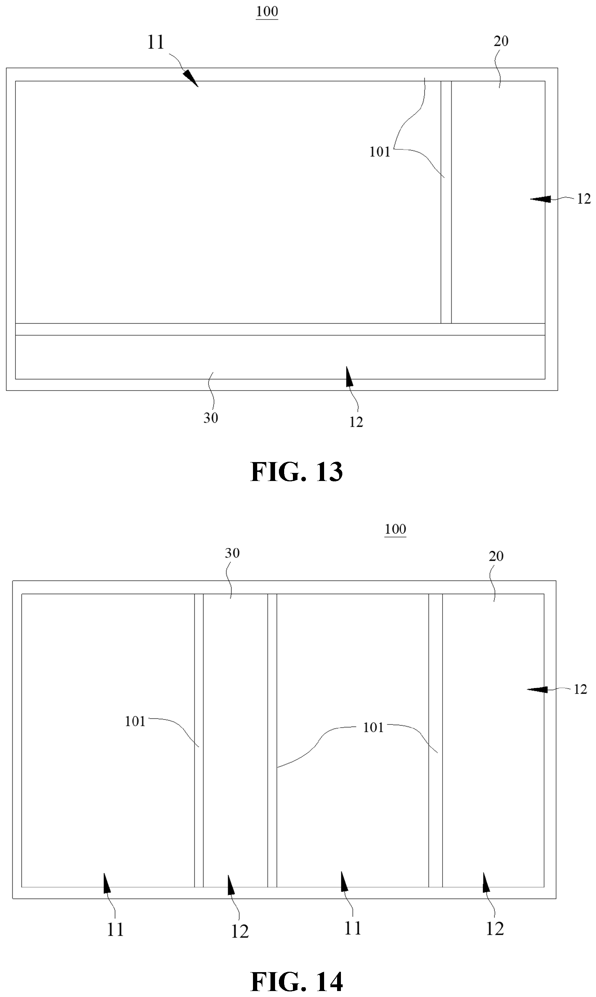

With reference to FIG. 3 to FIG. 14, some embodiments of the present disclosure provide the energy storage bin 100 which includes the bin body 10.

The bin bodies 10 can be cabinets or containers, cavities are formed in the bin bodies 10, and other components of the energy storage bin 100 can be accommodated in the cavities. The bin bodies 10 can be of a hexahedron structure.

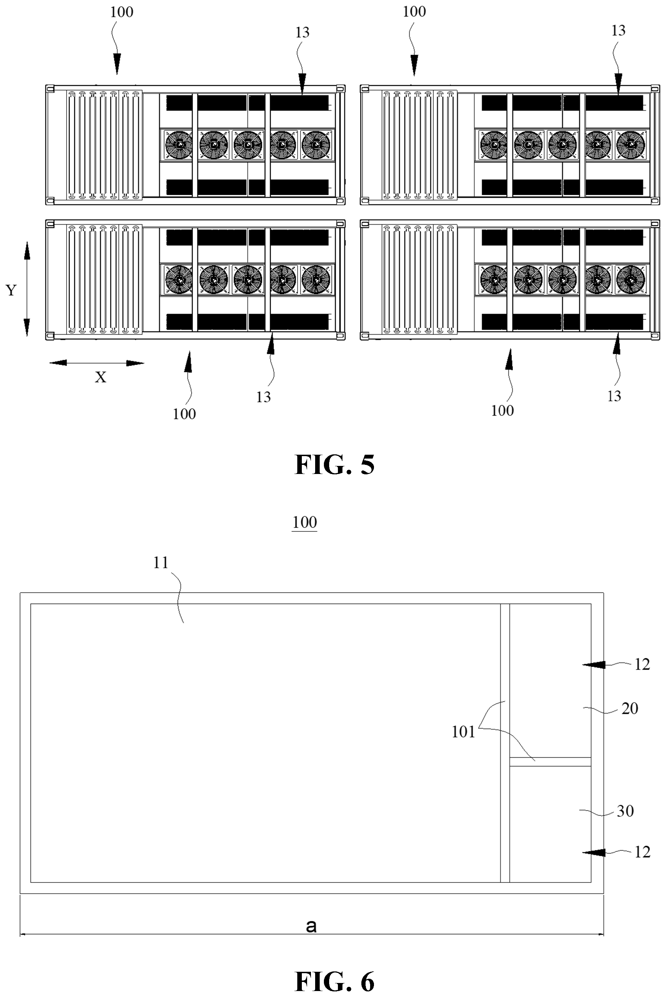

The bin bodies 10 are generally of a cuboid structure, the length direction and the width direction of the bin bodies 10 are both parallel to a horizontal plane, and the length direction of the bin bodies 10 is parallel to the longest edge of the cuboid structure of the bin bodies 10. The height direction of the bin bodies 10 is perpendicular to the ground. By way of example, as shown in FIG. 3 and FIG. 5, the length direction of the bin bodies 10 is represented by X, the width direction of the bin bodies 10 is represented by Y, and the height direction of the bin bodies 10 is represented by Z.

With reference to FIG. 3 to FIG. 14, some embodiments of the present disclosure further provide the energy storage apparatus, and the energy storage apparatus includes a plurality of energy storage bins 100 provided by the embodiments of the present disclosure; the plurality of energy storage bins 100 are arranged in the height direction, the length direction and/or the width direction, and each energy storage bin 100 includes the general control module 303.

The plurality of energy storage bins 100 are arranged in the height direction, the length direction and/or the width direction, namely, the plurality of energy storage bins 100 can be stacked or connected in the height direction, the length direction and/or the width direction.

With reference to FIG. 3 to FIG. 14, the number of the energy bins 100 in the energy storage apparatus can be one, two or any number of more than two, for example, the energy storage apparatus includes two energy bins 100 which are stacked in the height direction; for another example, the energy storage apparatus includes three energy bins 100 which are stacked in the height direction. By way of example, the sum of the heights of all the energy storage bins 100 stacked in the height direction is less than or equal to the sum of the heights of eight stacked standard containers.

The energy storage bin 100 further includes a plurality of energy units 2 which are configured to provide or store the electric energy.

The energy units 2 can be battery cells or a battery apparatus 80 formed by electrically connecting a plurality of battery cells.

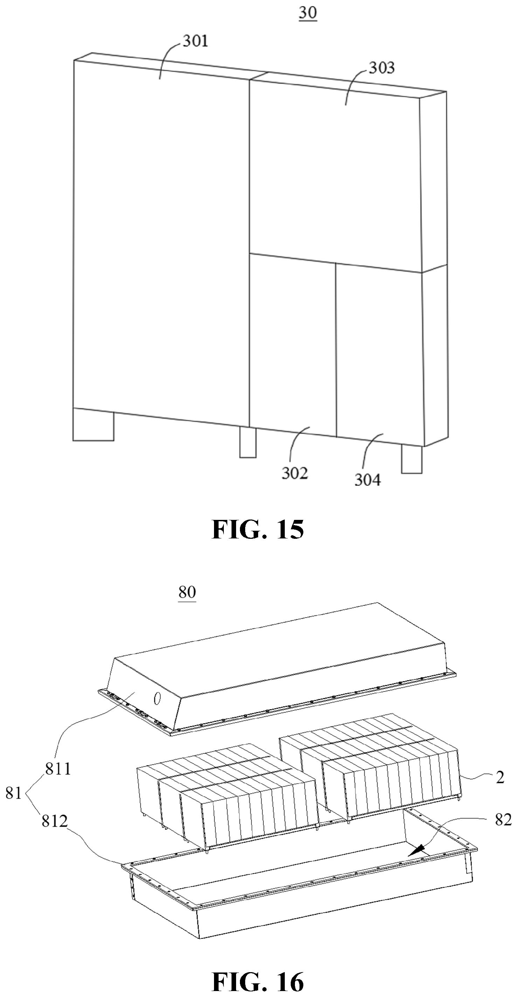

With reference to FIG. 4 and FIG. 16, the plurality of energy units 2 can form multi-layer and/or multi-row battery apparatuses 80, and each row or each rank of battery apparatuses 80 includes a plurality of battery apparatuses 80.

The battery apparatus 80 in the embodiments of the present disclosure can include one or more battery cell assemblies for providing voltage and capacity. The battery cell assembly can include the plurality of battery cells, and the plurality of battery cells are connected in series or in parallel or in a series-parallel mode through a busbar component.

In some embodiments, a battery cell assembly is generally formed by arranging a plurality of battery cells.

As an example, the battery cell assembly can be a battery module, and the battery module is arranged by a plurality of battery cells and fixed to form an independent module. As an example, the battery module may be formed by binding a plurality of battery cells with a binding tape.

In some embodiments, the battery apparatus 80 can be a battery pack, and the battery pack includes a box 81 and one or more battery cell assemblies accommodated in the box 81.

As an example, the battery cell assemblies can be battery modules and can be accommodated in the box 81 by a mode of fixing the battery modules into the box 81.

By way of example, the battery cell assemblies can also be accommodated in the box 81 by a mode of directly fixing the battery cells into the box 81.

By way of example, with reference to FIG. 16, the box 81 can include a first box body 811 and a second box body 812. The first box body 811 and the second box body 812 are buckled so that an enclosure space is formed in the box 81 to accommodate the battery cell assemblies. The enclosure refers to covered or closed, and can be sealed or non-sealed. The first box body 811 can be a top cover or a bottom plate.

By way of example, the box 81 can include the top cover, a frame, and the bottom plate. The top cover and the bottom plate are respectively connected to the frame so that the enclosure space is formed in the box 81 to accommodate the battery cell assemblies.

By way of example, the plurality of energy units 2 are accommodated in at least one bin body 10.

That is, some of the bin bodies 10 accommodate the energy units 2, while other bin bodies 10 do not accommodate the energy units 2; or all the bin bodies 10 accommodate the energy units 2.

In the embodiments that some of the bin bodies 10 accommodate the energy units 2, one or more of the bin bodies 10 accommodate the energy units 2.

The plurality of energy units 2 are accommodated in the bin bodies 10, and can be the battery modules or battery packs.

In some embodiments, with reference to FIG. 4, the energy storage bin 100 includes control modules 30 which are configured to perform electrical control on the plurality of energy units 2 of the energy storage apparatus.

In the embodiments, the control modules 30 are arranged and include general control modules 303; and the control modules 30 can control the electric energy input or output of the energy units 2 to realize electrical control on the energy units 2.

In some embodiments, with reference to FIG. 4, the weight of the energy storage bin 100 is M, and M is less than or equal to 45 tons.

The energy storage bin 100 refers to a cabinet that can be independently used, transported and hoisted.

In some embodiments, with reference to FIG. 4, the weight of the energy storage bin 100 is M, and M is less than or equal to 36 tons.

By way of example, the weight of the energy storage bin 100 can be a point value of any one or a point value between any two of 10 tons, 15 tons, 20 tons, 25 tons, 30 tons, 35 tons, 40 tons, and 45 tons.

During hoisting the energy storage bin 100, it helps hoisting of a related hoisting apparatus, facilitating the transfer of the energy storage bin 100.

In order for a single energy storage bin 100 to meet the transportation limits in some countries, the overall weight of the energy storage bin 100 is controlled to be not greater than 45 tons and the integration level of the energy storage bin 100 is as high as possible, so that the workload of mounting on site can be reduced; and moreover, the energy per unit area is increased, thus the cost input of customers can reduced.

By way of example, the energy storage bins 100 include the bins 10, the control modules 30, and the plurality of energy units 2; the control modules 30 and the plurality of energy units 2 are accommodated in the bin bodies 10; the control modules 30 include general control modules 303, thus a single energy storage bin 100 can form a complete system, that is, the single energy storage bin 100 can provide or store the electric energy.

By way of example, the energy storage bins 100 further include thermal management modules 20 and other parts for connecting pipelines.

According to the energy storage bin 100 provided by the embodiment of the present disclosure, the weight of the energy storage bin 100 is controlled to be less than or equal to 45 tons, which is conducive to relieving the problem of overweight in transportation, and reducing the transportation cost of the energy storage bin 100, thereby reducing the use cost of the energy storage bin 100. Meanwhile, on the premise of meeting the transportation weight, the sizes of the bin bodies 10 can be adjusted according to the requirement of energy density, thus being conducive to improving the flexibility of the capacity of the bin bodies 10 to meet different requirements, for example, the sizes of the bin bodies 10 can be made as large as possible, and the volume and electric quantity of the energy storage bins 100 can be improved as much as possible, thus reducing the use cost of the energy storage bins 100. In addition, the control modules 30 and the plurality of energy units 2 are arranged in the bin bodies 10, which is conducive to improving the integration level of the energy storage bins 100, and reducing the workload in field installation; and the energy storage bins 100 can be independently used, or a plurality of energy storage bins 100 are stacked together for use, thus improving the universality and application flexibility of the energy storage bins 100.

In some embodiments, with reference to FIG. 4, the sizes of the bin bodies 10 in the height direction are less than the sizes of standard containers in the height direction.

With reference to FIG. 3 and FIG. 6, the sizes a of the bin bodies 10 in the length direction are the distance between both ends of the bin bodies 10 in the length direction; the sizes b of the bin bodies 10 in the width direction are the distance between both ends of the bin bodies 10 in the width direction; and the sizes h of the bin bodies 10 in the height direction are the distance between both ends of the bin bodies 10 in the height direction. The sizes a, the sizes b, and the sizes h are the maximum sizes of outer contours of the bin bodies 10 in the corresponding directions. The bin bodies 10 can include eight corner fittings and six box walls, the eight corner fittings are located at eight corners of the cuboid structure of the bin bodies 10 and protrude out of the box walls of the bin bodies 10, the total span of two corner fittings arranged in the height direction is equal to the heights of the bin bodies 10, the total span of two corner fittings arranged in the length direction is equal to the lengths of the bin bodies 10, and the total span of two corner fittings arranged in the width direction is equal to the widths of the bin bodies 10. When calculating the sizes of the bin bodies 10, pipelines and cables which are connected to the bin body 10 and located outside the bin body 10 cannot be calculated as the sizes of the bin bodies 10.

The standard containers can be the sizes of the standard containers in transportation, such as 10 chi, 20 chi, 30 chi, 40 chi or 45 chi, which meets the corresponding standard; and the length, width, and height of the standard containers have the corresponding values. The standard containers can refer to GB/T1413-2023 Series 1 Freight containers-Classification, Dimensions and Ratings.

The 10 chi can include: size of 2,991 mm in the length direction, with the tolerance of 0-5 mm; size of 2.438 mm in the width direction, with the tolerance of 0-5 mm; size of 2,438 mm or less than 2,438 mm in the height direction; and the tolerance of 0-5 mm.

The 20 chi can include: size of 6,058 mm in the length direction, with the tolerance of 0-6 mm; size of 2,438 mm in the width direction, with the tolerance of 0-5 mm; size of 2,896 mm, 2,591 mm or not greater than 2,438 mm in the height direction; and the tolerance of 0-5 mm.

The 30 chi can include: size of 9125 mm in the length direction, with the tolerance of 0-10 mm; size of 2,438 mm in the width direction, with the tolerance of 0-5 mm; size of 2,896 mm, 2,591 mm or not greater than 2,438 mm in the height direction; and the tolerance of 0-5 mm.

The 40 chi can include: size of 12192 mm in the length direction, with the tolerance of 0-10 mm; size of 2,438 mm in the width direction, with the tolerance of 0-5 mm; size of 2,896 mm, 2,591 mm or not greater than 2,438 mm in the height direction; and the tolerance of 0-5 mm.

The 45 chi can include: size of 13,716 mm in the length direction, with the tolerance of 0-10 mm; size of 2,438 mm in the width direction, with the tolerance of 350-5 mm; size of 2,591 mm or 2,896 mm in the height direction; and the tolerance of 0-5 mm.

In the embodiments of the present disclosure, for the bin bodies 10 of various sizes, the size ±1%, ±2%, ±3%, ±4%, and ±5% can be regarded as the sizes within the tolerance range.

In some embodiments, the standard containers are 20-chi standard containers, with the heights of 2,896 mm, 2,591 mm or 2,438 mm.

In some embodiments, the sizes of the bin bodies 10 in the height direction are greater than or equal to one third of the sizes of standard containers in the height direction.

The sizes of the bin bodies 10 cannot be infinitely small, and when the sizes of the bin bodies 10 in the first direction are greater than or equal to one third of the sizes of the standard containers in the first direction, the energy storage bins 100 are high in manufacturability, high in volume energy density, and more convenient to transport and mount; and it is conducive to relieving the problem of overweight in transportation, and reducing the transportation cost of the energy storage bins 100, thereby decreasing the use cost of the energy storage bins 100.

In some embodiments, the sizes of the bin bodies 10 in the height direction are greater than or equal to one half of the sizes of the standard containers in the height direction.

When the sizes of the bin bodies 10 in the height direction are greater than or equal to half of the sizes of the standard containers in the height direction, and are less than the size of one standard container in the height direction, the energy storage bins 100 are high in manufacturability, high in volume energy density, and more convenient to transport and mount; and it is conducive to relieving the problem of overweight in transportation, and reducing the transportation cost of the energy storage bins 100, thereby decreasing the use cost of the energy storage bins 100. For example, when the energy storage apparatus includes two stacked energy storage bins 100, the size of each bin body 10 in the height direction is greater than or equal to half of the sizes of the standard containers in the height direction, and less than the size of one standard container in the height direction. After two bin bodies 10 are stacked, the height is greater than that of one standard container, but the weight of each energy storage bin 100 accommodating the energy units 2 and other parts is low, each energy storage bin 100 of the energy storage apparatus can be transported independently; and after the energy storage bins are stacked in site, the electric quantity of the energy storage apparatus is high.

In some embodiments, the sizes of the bin bodies 10 in the height direction are greater than or equal to one third of the sizes of the standard containers in the height direction, and are less than half of the sizes of the standard containers in the height direction.

When the sizes of the bin bodies 10 in the height direction are greater than or equal to one third of the sizes of the standard containers in the height direction, and are less than half of the sizes of the standard containers in the height direction, the energy storage bins 100 are high in manufacturability, high in volume energy density, and more convenient to transport and mount. For example, when the energy storage apparatus includes three stacked energy storage bins 100, the size of each energy storage bin 100 in the height direction is greater than or equal to one third of the sizes of the standard containers in the height direction, and is less than one half of the sizes of the standard containers in the height direction. After three energy storage bins 100 are stacked, the height is greater than that of one standard container, but the weight of each energy storage bin 100 is low, each energy storage bin 100 can be independently transported; and after the energy storage bins are stacked in site, the electric quantity of the energy storage apparatus is high.

In some embodiments, with reference to FIG. 3 to FIG. 14, the sizes of the bin bodies 10 in the length direction are consistent with the sizes of the standard containers in the length direction, and the sizes of the bin bodies 10 in the width direction are consistent with the sizes of the standard containers in the width direction.

In the embodiments, the sizes of the bin bodies 10 in the length direction are set to be consistent with the sizes of the standard containers in the length direction, the sizes of the bin bodies 10 in the width direction are set to be consistent with the sizes of the standard containers in the width direction, which is conducive to matching with transportation tools and lifting appliances of existing standard containers, and reducing the transportation cost of the energy storage apparatus, thereby reducing the use cost of the energy storage bin 100.

The sizes of the bin bodies 10 in the height direction are set to be less than the size of one standard container in the height direction, the bin bodies 10 do not exceed the heights of the corresponding standard containers transported by sea or land in the height direction of the bin bodies 10 during the transportation process, which is conducive to facilitating the transportation of the bin bodies 10, and reducing the transportation cost. The sizes of the bin bodies 10 in the length direction and the sizes of the bin bodies 10 in the width direction are consistent with those of the standard containers, so that the horizontal area occupied by the bin bodies 10 during transportation is consistent with that of the standard containers, which is conducive to matching with the transportation tools and lifting appliances of existing standard containers, and reducing the transportation cost of the energy storage apparatus, thereby reducing the use cost of the energy storage apparatus.

In some embodiments, with reference to FIG. 3, the heights of the bin bodies 10 are h, 850mm ≤ h < 2896mm.

By way of example, the heights of the bin bodies 10 can be a point value of any one or a point value between any two of 850 mm, 900 mm, 950 mm, 1,000 mm, 1,050 mm, 1,100 mm, 1,150 mm, 1,200 mm, 1,300 mm, 1,400 mm, 1,500 mm, 1,600 mm, 1,800 mm, 2,000 mm, 2,100 mm, 2,200 mm, 2,300 mm, 2,400 mm, 2,500 mm, 2,600 mm, 2,700 mm, 2,800 mm, and 2,895 mm.

In the embodiments, the heights of the bin bodies 10 are set to be 850mm ≤ h < 2896mm, which is conducive to controlling the total weight of the energy storage bins 100 to be not greater than 45 tons; and moreover, the sizes of the bin bodies 10 can be adjusted according to the requirement for energy density, thus further reducing the use cost of the energy storage bins 100.

In some embodiments, the heights of the bin bodies 10 are h, 1300mm ≤ h ≤ 2400mm.

By way of example, the heights of the bin bodies 10 can be a point value of any one or a point value between any two of 1300 mm, 1350 mm, 1400 mm, 1450 mm, 1500 mm, 1550 mm, 1600 mm, 1650 mm, 1700 mm, 1750 mm, 1800 mm, 1850 mm, 1900 mm, 1950 mm, 2000 mm, 2050 mm, 2100 mm, 2150 mm, 2200 mm, 2250 mm, 2300 mm, 2350 mm, and 2400 mm.

In the embodiments, the heights of the bin bodies 10 are set to be 1300mm ≤ h ≤ 2400mm, which is conducive to controlling the total weight of the energy storage bins 100 to be not greater than 45 tons; and moreover, the sizes of the bin bodies 10 can be adjusted according to the requirement for energy density, thus further reducing the use cost of the energy storage bins 100.

In some embodiments, with reference to FIG. 4, the energy storage apparatus includes the thermal management modules 20, and the thermal management modules 20 are accommodated in the bin bodies 10 and are configured to manage the temperatures of the plurality of energy units 2 in the energy storage bin 100.

In the embodiments, the thermal management modules 20 are arranged and can manage the temperatures of the energy units 2, so that the risk of the temperature runaway of the energy units 2 is reduced. In addition, the thermal management modules 20 are arranged in the bin bodies 10, which is conducive to improving the integration level of the energy storage bins 100, and reducing the workload in field installation; and the energy storage bins 100 can be independently used, or a plurality of energy storage bins 100 are stacked together for use, thus improving the universality and application flexibility of the energy storage bins 100.

Definitely, in some other embodiments, the energy storage bin 100 can also not include the thermal management modules 20.

In some embodiments, with reference to FIG. 15, the control modules 30 further include at least one of main control modules 301, power distribution modules 302, and fire control modules 30430.

The energy units 2 are electrically connected to the main control modules 301. The main control modules 301 are electrically connected to the general control modules 303. The main control modules 301, the general control modules 303, and the fire control modules 30430 are all electrically connected to the power distribution modules 302.

The main control modules 301 are configured to control the input and output of high-voltage electric energy of the energy units 2 in the bin bodies 10. The general control modules 303 are configured to control the on-off action of the main control modules 301 in the bin bodies 10.

The fire control modules 30430 are configured to control fire elements to act when a fire occurs due to temperature imbalance in the bin bodies 10; and the fire elements can be fire extinguishers and the like and can be arranged in the bin bodies 10.

The power distribution modules 302 are configured to electrically connect the main control modules 301, the general control modules 303, and the fire control modules 30430, so as to facilitate the connection of circuits of the main control modules 301, the general control modules 303, and the fire control modules 30430 as well as the normal operation of the main control modules 301, the general control modules 303, and the fire control modules 30430.

In the embodiments that the energy storage apparatus includes the plurality of energy storage bins 100, the control module 30 of each energy storage bin 100 can be the same or different.

The thermal management modules 20 include heat exchange units, for example, liquid cooling units, with reference to FIG. 4, the thermal management modules 20 perform heat exchange on the energy units 2 through heat exchange pipelines (for example, liquid cooling pipelines 90), thereby realizing temperature management on the energy units 2 and reducing the risk of temperature runaway of the energy units 2.

In some embodiments, with reference to FIG. 3 to FIG. 14, the bin bodies 10 are internally provided with energy bins 11 and control bins 12. The energy bins 11 are configured to accommodate at least one energy unit 2, and at least some of the control modules 30 and/or at least some of the thermal management modules 20 are accommodated in the control bins 12.

At least some of the control modules 30 and/or at least some of the thermal management modules 20 are accommodated in the control bins 12, namely, at least some of the control modules 30 are accommodated in the control bins 12, or at least some of the thermal management modules 20 are accommodated in the control bins 12, or at least some of the control modules 30 and at least some of the thermal management modules 20 are accommodated in the control bins 12.

By way of example, some of the control modules 30 can be accommodated in the energy bins 11, for example, the main control modules 301 are accommodated in the energy bins 11.

Definitely, in some embodiments, some of thermal management modules 20 can be accommodated in the energy bins 11.

In the embodiments, the bin bodies 10 are internally provided with the energy bins 11 and the control bins 12, and at least some of the control modules 30 and/or at least some of the thermal management modules 20 are arranged in the bin bodies 10, thus the spaces in the bin bodies 10 can be fully utilized, thereby further improving the space utilization rate of the bin bodies 10.

In some embodiments, with reference to FIG. 3 to FIG. 14, at least some of the bin bodies 10 include separators 101 which are arranged between the energy bins 11 and the control bins 12, and the energy bins 11 and the control bins 12 share the separators 101.

The separators 101 can include metal plates.

The separators 101 can improve the structural strength of the bin bodies 10, and can also improve the sealing performance and thermal insulation performance of the energy bins 11.

Heat exchange pipelines and connecting wire harnesses 50 penetrate the separators 101, the connecting wire harnesses 50 include high-voltage wire harnesses 51 and/or low-voltage wire harnesses 52; the thermal management modules 20 in the control bins 12 can perform heat exchange on the energy units 2 in the energy bins 11 through the heat exchange pipelines (for example, the liquid cooling pipelines 90), and the control modules 30 in the control bins 12 can perform electrical control on the energy units 2 in the energy bins 11 through the connecting wire harnesses 50.

By way of example, when the heat exchange pipelines and the connecting wire harnesses 50 penetrate the separators 101, the penetrating positions can be sealed.

By way of example, the separators 101 are filled with heat insulation media.

The heat insulation media can be materials capable of insulating heat, such as heat insulation cotton.

The heat insulation media can improve the structural strength of the separators 101, and achieve the effects of flame retardance and heat preservation, which is beneficial to reducing the heat loss of the energy bins 11 and the influence of external heat on the energy units 2 in the energy bins 11.

In some embodiments, the bin bodies 10 include a plurality of control bins 12, the control bins 12 can accommodate the control modules 30 and the thermal management modules 20, or all the control bins 12 accommodate the control modules 30, or all the control bins 12 accommodate the thermal management modules 20.

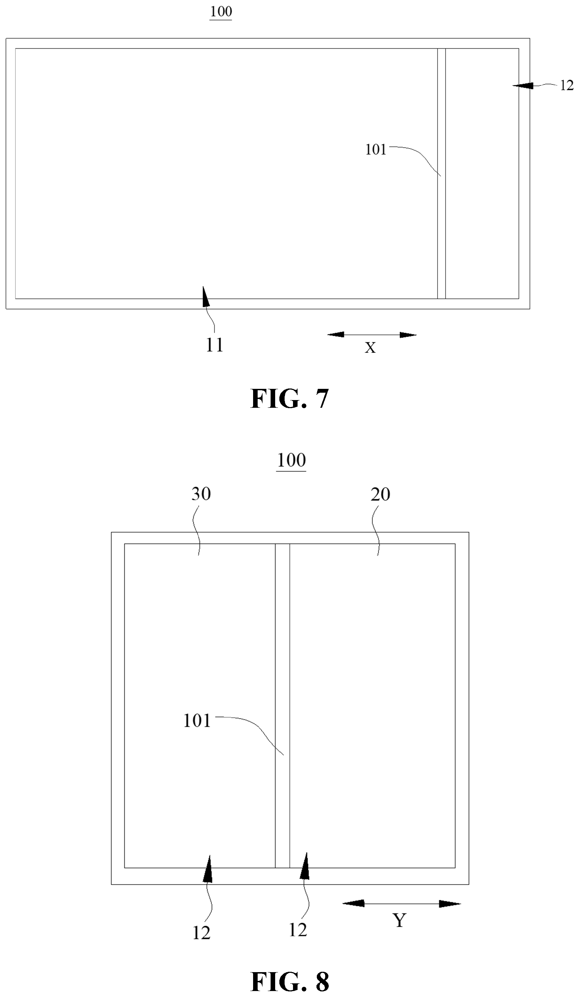

In some embodiments, with reference to FIG. 6 and FIG. 8, a plurality of control bins 12 are provided, the separators 101 can be arranged between adjacent control bins 12, and the adjacent control bins 12 share the separators 101.

By way of example, the separators 101 separate the thermal management modules 20 from the control modules 30, which reduces the risk of interference between the thermal management modules 20 and the control modules 30, thereby improving the reliability of the energy storage apparatus.

The thermal management modules 20 and the control modules 30 are separated by the separators 101, and the separators 101 can separate the thermal management modules 20 from the control modules 30, so that the interference of the thermal management modules 20 to the control modules 30 can be reduced, namely, the electromagnetic interference of a high-voltage line to low voltage can be reduced, and the influence of external rainfall or exposure to intensive sunlight on the control modules 30 can be reduced.

There are a variety of arrangements for energy bins 11 and control bins 12.

In some embodiments, with reference to FIG. 6, at least some of the control bins 12 and energy bins 11 are arranged in the height direction of the bin bodies 10.

Some of the control bins 12 and energy bins 11 can be arranged in the height direction of the bin bodies 10, or all the control bins 12 and the energy bins 11 can be arranged in the height direction of the bin bodies 10.

By way of example, the control bins 12 are arranged above the energy bins 11, and therefore, the parts in the control bins 12 can block the thermal radiation at the top to reduce the influence of the thermal radiation on the inside of the energy bins 11.

By way of example, with reference to FIG. 7, at least some of the control bins 12 and energy bins 11 are arranged in the length direction of the bin bodies 10.

Some of the control bins 12 and energy bins 11 can be arranged in the length direction of the bin bodies 10, or all the control bins 12 and the energy bins 11 can be arranged in the length direction of the bin bodies 10.

By arranging the control bins 12 at the end portions of the bin bodies 10, the spaces in the bin bodies 10 can be utilized to the maximum, and in addition, the control bins 12 and the energy bins 11 can be arranged closer, which is conducive to improving the structural compactness.

In addition, some of the bin bodies 10 can be arranged to be of a mirror structure, which facilitates matts-shaped arrangement in site; the control bins 12 of the bin bodies 10 can be located at the ends of the bin bodies 10 close to the outside, thereby reducing land waste caused by reserving a maintenance channel more than 3 m between every two bins of traditional bins and increasing on-site area energy density.

In some embodiments, with reference to FIG. 3 to FIG. 4, the thermal management modules 20 are located on the tops of the bin bodies 10.

In the embodiments, the thermal management modules 20 are located on the tops of the bin bodies 10, and upper portions of the thermal management modules 20 are not shielded by shielding objects, which facilitates heat dissipation of the thermal management modules 20, thereby prolonging the service life of the energy storage apparatus. Moreover, the overall height of center of gravity of the energy storage bin 100 can be reduced, thus improving the transportation safety. In addition, it is designed to be separated from the energy bins 11, thus the heat preservation and insulation effects of the energy bins 11 can be improved; and moreover, the thermal management modules 20 shield the heat radiation at the top, so that the influence of the heat radiation on the interiors of the energy bins 11 can be reduced.

In other embodiments, with reference to FIG. 6, the thermal management modules 20 and the energy bins 11 are arranged in the length direction of the bin bodies 10.

The thermal management modules 20 are arranged at end portions of the bin bodies 10, so that the spaces in the bin bodies 10 are utilized to the maximum.

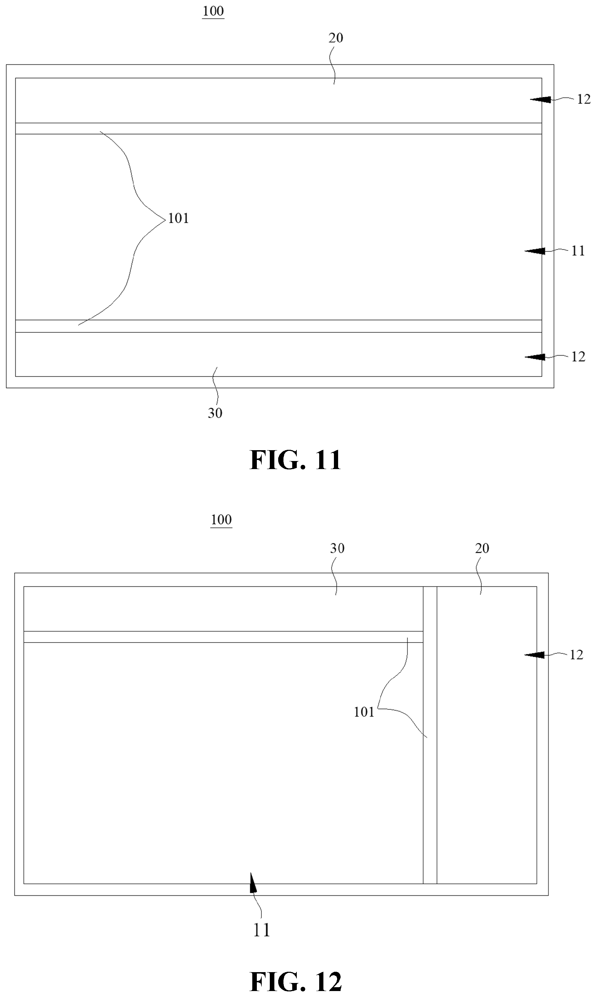

In some embodiments, with reference to FIG. 11 to FIG. 13, the control modules 30 and the energy bins 11 are arranged in the height direction of the bin bodies 10.

That is, the control modules 30 can be located above the energy bins 11, or below the energy bins 11, or between two energy bins 11 in the height direction.

For example, the control modules 30 are arranged on the tops of the bin bodies 10, namely, the control modules 30 are located above the energy bins 11 of the bin bodies 10, the height of an operating part meets the requirement of human engineering, maintenance personnel can reach an operating handle of a control part by standing on one side of the bin bodies 10, which facilitates maintenance and overhaul.

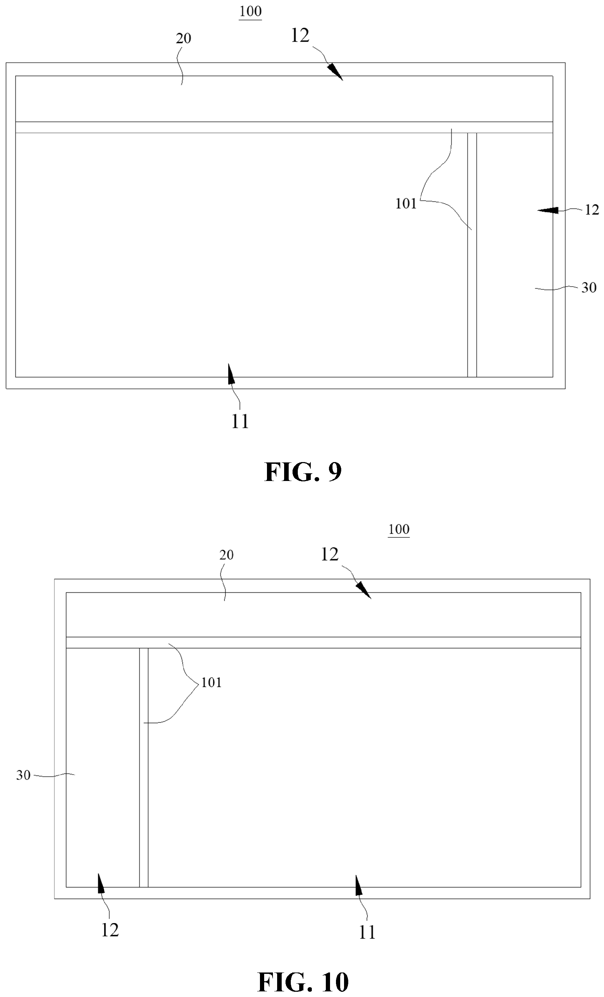

In some embodiments, with reference to FIG. 9 to FIG. 10, the control modules 30 and the energy bins 11 are arranged in the length direction of the bin bodies 10.

That is, the control modules 30 can be located at the left ends of the energy bins 11, or the right ends of the energy bins 11, or between two energy bins 11 in the length direction.

In some embodiments, with reference to FIG. 6, the control modules 30 and the thermal management modules 20 are arranged in the height direction of the bin bodies 10.

By way of example, the control modules 30 and the thermal management modules 20 can be stacked in the height direction of the bin bodies 10, and the thermal management modules 20 are located above the control modules 30.

By way of example, ventilation openings 13 are formed in top walls above the thermal management modules 20 and are configured to perform ventilation on the thermal management modules 20.

By way of example, the ventilation openings 13 are formed in side walls of the thermal management modules 20 and are configured to perform ventilation on the thermal management modules 20.

The thermal management modules 20 are located on the tops of the control modules 30, and upper portions of the thermal management modules 20 are not shielded by shielding objects, which facilitates heat dissipation of the thermal management modules 20. The thermal management modules 20 are separated from the control modules 30 by the separators 101, the separators 101 can separate the thermal management modules 20 from the control modules 30, thus reducing the interference of the thermal management modules 20 on the control modules 30, that is, the electromagnetic interference of a high-voltage line on low voltage can be reduced, and the influence of external rainfall or exposure to intensive sunlight on the control modules 30 can also be reduced.

In some embodiments, with reference to FIG. 8, the control modules 30 and the thermal management modules 20 are arranged in the width direction of the bin bodies 10, and the thermal management modules 20 are arranged on the front sides of the control modules 30.

The thermal management modules 20 are located on the front sides of the control modules 30, and upper portions and side surfaces of the thermal management modules 20 are not shielded by shielding objects, which facilitates heat dissipation of the thermal management modules 20.

In the embodiments, the thermal management modules 20 are arranged on the front sides of the control modules 30, namely, the thermal management modules 20 are arranged on sides of the bin bodies 10 close to a battery bin door, and water ports of heat exchange pipelines are arranged on the sides of the bin bodies 10 close to the battery bin door, therefore, the connection between the thermal management modules 20 and the heat exchange pipelines is facilitated, the number of elbows for the heat exchange pipelines can be reduced, further, the flow resistance is reduced, and the temperature control effect of the thermal management modules 20 is improved.

Definitely, in some embodiments, the control modules 30 and the thermal management modules 20 can also be arranged in the length direction of the bin bodies 10.

In some embodiments, with reference to FIG. 6, the thermal management modules 20 are arranged at the tops of the energy bins 11, and the control modules 30 are arranged at the bottoms of the energy bins 11.

The thermal management modules 20 are located on the tops of the energy bins 11, and upper portions of the thermal management modules 20 are not shielded by shielding objects, which facilitates heat dissipation of the thermal management modules 20, thereby prolonging the service life of the energy storage apparatus. Moreover, the overall height of center of gravity of the energy storage bin 100 can be reduced, thus improving the transportation safety. In addition, it is designed to be separated from the energy bins 11, thus the heat preservation and insulation effects of the energy bins 11 can be improved; and moreover, the thermal management modules 20 shield the heat radiation at the top, so that the influence of the heat radiation on the interiors of the energy bins 11 can be reduced. Meanwhile, the control modules 30 are arranged at the bottoms of the energy bins 11, thereby facilitating maintenance and overhaul.

In some embodiments, with reference to FIG. 3, a first bin door 102 is arranged on at least one side of the energy bins 11 in the width direction, and a second bin door 103 is arranged on at least one side of the control bin 12 in the width direction.

The first bin doors 102 and the second bin doors 103 can be access doors through which the energy storage apparatus 100 can be conveniently maintained.

All the energy bins 11 and the control bins 12 can be provided with the access doors.

The first bin door 102 is arranged on at least one side of the energy bins 11 in the width direction, or, the first bin doors 102 are arranged on both sides of the energy bins 11 in the width direction, and thus the second bin doors 103 are arranged in areas of the bin bodies 10 corresponding to at least some of the energy bins 11.

The second bin door 103 is arranged on at least one side of the control bins 12 in the width direction, or, the second bin doors 103 are arranged on both sides of the control bins 12 in the width direction, and thus the second bin doors 103 are arranged in areas of the bin bodies 10 corresponding to at least some of the control bins 12.

By way of example, the second bin doors 103 are arranged on the right sides or front sides of the control bins 12; liquid cooling pipelines 90, high-voltage wire harnesses 51, low-voltage wire harnesses 52 and the like can be overhauled only by opening the second bin doors 103.

In the embodiments, it reduces the land waste caused by reserving a necessary maintenance channel more than 3 m between every two bin bodies 10 of traditional bins 10; and only the normal maintenance channel for paint repair is needed to be reserved between matts-shaped bins 10, which improves the land investment returns of the users and increases the energy yield per unit area for the users.

In order to facilitate rapid field mounting of the customers, the control modules 30 and the thermal management modules 20 are integrated in the bin bodies 10, and the bin bodies 10 can be connected to the PCS and the EMS after being stacked on site, thus the workload of mounting on site is reduced, the assembling efficiency is improved and the customer can use conveniently.

The PCS (Power Conversion System) can control the charging and discharging processes of a storage battery, perform AC-DC conversion and directly supply power to an AC load in case of no power grid. The PCS includes a DC/AC bidirectional converter, a control unit and the like. A PCS controller receives a background control instruction through communication and controls the converter to charge or discharge the battery according to a symbol and the size of the power instruction, so as to adjust active power and reactive power of the power grid. The PCS controller communicates with a BMS through a CAN interface to acquire status information of a battery pack, thus archiving protective charging and discharging of the battery.

The EMS (Energy Management System) is a set of software and hardware for monitoring, controlling, analyzing and optimizing an energy system. The EMS realizes efficient management and optimal configuration of energy by monitoring and intelligently controlling various links of energy production, distribution and consumption in real time.

In some embodiments, the PCS can be integrated in the bin bodies 10.

The control bins 12 are electrically connected to the energy bins 11 to realize current control and signal detection on the energy bins 11, the control modules 30 are electrically connected to the thermal management modules 20 to realize circuit control and signal detection on the thermal management modules 20; meanwhile, the energy bins 11 are in high-voltage connection with the external PCS to realize charging and discharging on the energy storage system 2000, and are is in signal connection with the external EMS to realize signal detection and control on the energy storage system 2000; and moreover, heat preservation partition walls are arranged between the control modules 30 and the thermal management modules 20 as well as between the control modules 30 and the energy bins 11 to realize heat preservation and heat insulation on the energy bins 11, thus the thermal management modules 20 can control an electrical box by the maximum efficiency, and the auxiliary energy power consumption is reduced.

By way of example, the general control modules 301 are arranged in the energy bins 11 of the energy storage bins 100, other control modules 30 are arranged at the ends or in the middle of the energy storage bins 100; the design heights of the frequently operated parts meets ergonomic requirements; and maintenance personnel can reach operating handles of the control modules 30 while standing at the side of the energy storage bins 100, which is conducive to maintenance and repair.

By way of example, the energy storage bins 100 can be used as a single energy storage system 2000, or the plurality of energy storage bins 100 can be stacked together for use; when the energy storage bins 100 are stacked together for use, the energy storage bins 100 on the upper layer and the lower layer are connected to each other by a middle twist lock or a bolt, which ensures the integral structural strength after the energy storage bins 100 are mounted together.

In some embodiments, with reference to FIG. 3, ventilation openings 13 are formed in the top walls and/or side walls of at least some of the bin bodies 10, and the ventilation openings 13 are configured to perform ventilation on the thermal management modules 20.

The ventilation openings 13 are formed in the top walls of at least some of bins 10, namely, the bin bodies 10 which accommodate the thermal management modules 20 are provided with the ventilation openings 13.

The top walls of the bin bodies 10 can be completely opened to form one ventilation opening 13. Or, the top walls of the bin bodies 10 are partially opened to form one ventilation opening 13; for example, the sides of the top walls of the bin bodies 10 in the length direction are provided with openings, so that the top walls of the bin bodies 10 partially form the ventilation opening 13.

By way of example, the ventilation openings 13 in the top walls of the bin bodies 10 can be configured to exhaust air, and the ventilation openings 13 in the side walls of the bin bodies 10 can be configured to introduce air.

In the embodiments, the ventilation openings 13 are located in the top walls of the bin bodies 10, which facilitates the heat dissipation of the thermal management modules 20, thus more heat dissipation channels can be provided for the thermal management modules 20, thereby improving the temperature control effect of the thermal management modules 20.

In some embodiments, with reference to FIG. 4, the energy storage bin 100 includes a plurality of battery apparatuses 80, each battery apparatus 80 includes a thermal management part 82 and the plurality of energy units 2, and the thermal management part 82 is configured to adjust the temperature of the energy units 2. The thermal management modules 20 communicate with a plurality of thermal management parts 82 through the liquid cooling pipelines 90; the liquid cooling pipelines 90 include a main pipeline 91 and the plurality of branch pipelines 92, the plurality of branch pipelines 92 are connected to the main pipeline 91 in parallel, the main pipeline 91 communicate with the thermal management modules 20, and the plurality of branch pipelines 92 respectively communicate with the plurality of thermal management parts 82; the main pipeline 91 is located above the plurality of battery apparatuses 80, or, the main pipeline 91 is located below the plurality of battery apparatuses 80.

By way of example, the thermal management parts 82 can be plate-shaped or tube-shaped, and flow channels are formed in the thermal management parts 82 and can be configured to introduce fluid to heat or cool the energy units 2. The fluid can be refrigerants or cooling liquid.

When the battery apparatuses 80 are battery modules, the thermal management parts 82 can be bottom plates, top plates or side plates of the battery modules and can also be located between adjacent energy units 2.

When the battery apparatuses 80 are the battery packs, with reference to FIG. 16, the thermal management parts 82 can be part of a box 81 or the thermal management parts 82 are located in accommodating spaces of the box 81, and the thermal management parts 82 can also be located between the adjacent energy units 2.

In the embodiments that the main pipeline 91 is located above the plurality of battery apparatuses 80, the liquid cooling media flow to the plurality of branch pipelines 92 from top to bottom through the main pipeline 91 so as to cool the battery apparatuses 80.

In the embodiments that the main pipeline 91 is located below the plurality of battery apparatuses 80, the liquid cooling media flow to the plurality of branch pipelines 92 from bottom to top through the main pipeline 91 so as to cool the battery apparatuses 80.

The main pipeline 91 is arranged above the plurality of battery apparatuses 80, or, below the plurality of battery apparatuses 80, which is conducive to shortening the liquid cooling pipelines 90, thereby reducing the cost, and improving the cooling efficiency.

In some embodiments, the energy units 2 are battery cells, and the weight of each energy unit 2 is 5-60 kg.

The weight of the single energy unit 2 can be a point value of any one or a point value between any two of 5 kg, 10 kg, 15 kg, 20 kg, 25 kg, 30 kg, 35 kg, 40 kg, 45 kg, 50 kg, 55 kg, and 60 kg. As an example, the mass of the single energy unit 2 is 30 kg.

The energy units 2 have proper weight, so that a proper amount of energy units 2 can be accommodated into the bin bodies 10, and the energy density is moderate under the condition of meeting the transportation requirements.

In some embodiments, the weight of the energy storage bin 100 is M, the total weight of the energy units 2 in the bin bodies 10 is M1, (M1/M) × 100% ≥ 60%.

By way of example, (M1/M) × 100% can be 60%, 61%, 62%, 63%, 64%, 65%, 66%, 67%, 68%, 69%, 70%, 71%, 72%, 73%, 74%, 75%, 76%, 77%, 78%, 79%, 80%, 90%.

Therefore, on one hand, the weight ratio of the energy units 2 in the bin bodies 10 per unit volume can be increased, thereby increasing the electric quantity of the energy storage apparatus per unit volume; on the other hand, during the transportation of the energy storage bin 100, more energy units 2 which contribute to energy storage and are high in production difficulty and cannot be produced at a destination are transported, while other structures can be produced at a place closer to the destination without transportation or reduced transportation; and after the bin bodies 10 are assembled into the energy storage bin 100, the transportation cost of the assembled energy storage bin 100 is reduced.

In some embodiments, (M1/M) × 100% ≥ 80%.

By way of example, (M1/M) × 100% can be 80%, 81%, 82%, 83%, 84%, 85%, 86%, 87%, 88%, 89%, or 90%.

Therefore, the transportation cost of the assembled energy storage bin 100 is further reduced.

In some embodiments, the weight of the energy storage bin 100 is M, the plurality of battery apparatuses 80 are arranged in the bin bodies 10, each battery apparatus 80 includes a box 81 and the plurality of energy units 2, the plurality of energy units 2 are accommodated in the box 81, the total weight of the battery apparatuses 80 is M2, 70% ≤ (M2/M) × 100% ≤ 90%.

(M2/M) × 100% can be a point value of any one or a point value between any two of 70%, 71%, 72%, 73%, 74%, 75%, 76%, 77%, 78%, 79%, 80%, 81%, 82%, 83%, 84%, 85%, 86%, 87%, 88%, 89%, and 90%.

When (M2/M) × 100% ≥ 70%, the weight ratio of the energy units 2 in the bin bodies 10 per unit volume can be improved, and the energy density of the bin bodies 10 is improved; and when (M2/M) × 100% ≤ 90% , the structural strength of the bin bodies 10 can be maintained. Therefore, when 70% ≤ (M2/M) × 100% ≤ 90%, the energy density of the energy storage bin 100 and the structural strength of the bin bodies 10 can be balanced, so that the practicability of the bin bodies 10 is improved.

In some embodiments, with reference to FIG. 4, the plurality of battery apparatuses 80 can be arranged in rows and ranks, the plurality of battery apparatuses 80 in each row are arranged in the length direction, the plurality of battery apparatuses 80 in each rank are arranged in the height direction, and each battery apparatus 80 includes the thermal management part 82 and the plurality of energy units 2. The bin bodies 10 also include first connectors 3 and a plurality of second connectors 4; the first connectors 3 communicate with the thermal management modules 20 and the second connector 4; and each second connector 4 communicates with the corresponding thermal management part 82 of the plurality of battery apparatuses 80 in each rank.

By way of example, the plurality of battery apparatuses 80 are arranged in 2 layers by 2 ranks, 3 layers by 3 ranks, 4 layers by 4 ranks, and 4 layers by 3 ranks.

It is to be noted that the plurality of battery apparatuses 80 can also be arranged in a plurality of rows, such as 2 rows, 3 rows, 4 rows, 5 rows or 6s rows; and the plurality of battery apparatuses 80 can also be arranged in a plurality of ranks, such as 2 ranks, 3 ranks, 4 ranks, 5 ranks or 6 ranks.

In some embodiments, the volume of the bin bodies 10 is V, the total volume of the energy units 2 in the bin bodies 10 is V1, (V1/V) × 100% ≥ 30%.

The energy units 2 include shells, and the volume of the energy units 2 is the volume of the shells. For example, the energy units 2 are square-shell energy units 2, and the product of the length, width and height of the square-shell energy units 2 is the product of the length, width and height of the shells.

In the embodiments that the energy units 2 further include electrode terminals, the electrode terminals are arranged on the shells and partially protrude out of the shells, the electrode terminals are electrically connected to an electrode assembly, and the parts of the electrode terminals protruding out of the shells are not calculated as the volume of the energy units 2.

(V1/V) × 100% can be 30%, 31%, 32%, 33%, 34%, 35%, 36%, 37%, 38%, 39%, 40%, 41%, 42%, 43%, 44%, 45%, 46%, 47%, 48%, 49%, 50%, 55%, 60%, 65%, or 70%.

On one hand, the volume proportion of the energy units 2 in the bin bodies 10 per unit volume can be increased, thus increasing the electric quantity of the energy storage apparatus per unit volume; on the other hand, during the transportation of the energy storage bin 100, more energy units 2 which contribute to energy storage and are high in production difficulty and cannot be produced at the destination are transported, while other functional elements such as control elements of the energy storage bin 100 can be produced at the place closer to the destination without transportation or with reduced transportation; and after the bin bodies 10 are assembled into the energy storage bin 100, the transportation cost of the assembled energy storage bin 100 is reduced.

In some embodiments, (V1/V) × 100% ≥ 50%.

(V1/V) × 100%can be 50%, 51%, 52%, 53%, 54%, 55%, 56%, 57%, 58%, 59%, 60%, 61%, 62%, 63%, 64%, 65%, 66%, 67%, 68%, 69%, 70%, 75%, 80%, 85%, or 90%.

The transportation cost of the assembled energy storage apparatus is further reduced.

In some embodiments, the volumes of the bin bodies 10 are V, the plurality of battery apparatuses 80 are arranged in the bin bodies 10, each battery apparatus 80 includes the box 81 and the plurality of energy units 2, the plurality of energy units 2 are accommodated in the box 81, the total volume of the battery apparatuses 80 is V2, 50% ≤ (V2/V) × 100% ≤ 80%.

The volume of the energy units 2 is the volume of the box 81. For example, the box 81 is of a cuboid structure, and the volume of the energy units 2 is equal to the product of the length, width and height of the box 81.

(V2/V) × 100%can be a point value of any one or a point value between any two of 50%, 51%, 52%, 53%, 54%, 55%, 56%, 57%, 58%, 59%, 60%, 61%, 62%, 63%, 64%, 65%, 66%, 67%, 68%, 69%, 70%, 75%, and 80%.

When (V2/V) × 100% ≥ 50%, the volume proportion of the energy units 2 in the bin bodies 10 per unit volume can be improved, and the energy density of the energy storage apparatus is improved; and when (V2/V) × 100% ≤ 80%, the bin bodies 10 can have structural members with enough volume to maintain the structural strength. Therefore, when 50%≤(V2/V)×100%≤80%, the energy density of the energy storage apparatus and the structural strength of the bin bodies 10 can be balanced, and the practicability of the bin bodies 10 is improved.

In some embodiments, with reference to FIG. 6, the energy of the energy storage bin 100 is E, the sizes of the bin bodies 10 in the length direction are a, the sizes of the bin bodies 10 in the width direction 10 are b, 250KW/*m* ² ≤ E/(a × b) ≤ 700KW/*m* ².

E/(a × b) can be a point value of any one or a point value between any two of 250 KW/m², 300 KW/m², 350 KW/m², 400 KW/m², 450 KW/m², 460 KW/m², 470 KW/m², 480 KW/m², 485 KW/m², 490 KW/m², 495 KW/m², 500 KW/m², 510 KW/m², 550 KW/m², 600 KW/m², 650 KW/m², 700 KW/m².

The energy E can be obtained from a nameplate of the energy storage apparatus.

When E/(a × b) ≥ 250KW/*m* ², the energy storage bin 100 can have large energy density, and thus the practicability of the energy storage bin 100 is improved; when E/(a×b)≤700KW/m², the risk that the bin bodies 10 are large in mass and consequently other bin bodies 10 are crushed can be reduced, and transportation of the bin bodies 10 is facilitated. Therefore, when 250KW/*m* ² ≤ E/(a × b) ≤ 700KW/m ², the energy density of the energy storage bin 100 and the mass setting of the bin bodies 10 are balanced, thereby improving the practicability of the energy storage bin 100 as well as facilitating the transportation of the energy storage bin 100.

In some embodiments, 450KW/*m* ² ≤ E/(a × b) ≤ 600KW/*m* ².

E/(a × b)can be a point value of any one or a point value between any two of 450 KW/m², 455 KW/m², 460 KW/m², 465 KW/m², 470 KW/m², 475 KW/m², 480 KW/m², 485 KW/m², 490 KW/m², 495 KW/m², 500 KW/m², 505 KW/m², 510 KW/m², 515 KW/m², 520 KW/m², 530 KW/m², 540 KW/m², 550 KW/m², 600 KW/m².

An as example, E/(a × b) = 490KW/*m* ². The energy density of the energy storage bin 100 and the mass settings of the bin bodies 10 can be further improved, thus facilitating the transportation of the energy storage bin 100.

In some embodiments, every two adjacent bin bodies 10 are welded, clamped, locked or connected by a fixing member along the height direction.

The fixing member can be at least one of a bolt, a nut, a pin or a rivet. Definitely, the fixing member can also include a fixing plate and the like for fixedly connecting every two adjacent bin bodies 10 in the height direction.

By way of example, every two adjacent bin bodies 10 in the height direction are connected through a middle twist lock.

Every two adjacent bin bodies 10 in the height direction can be are connected through the fixing members and can be limited by the fixing members, which is conducive to reducing the risk that every two adjacent bin bodies 10 move mutually after being stacked, thereby improving the structural stability of the energy storage apparatus.

The embodiment of the present disclosure provides energy storage bins 100 which include the bins 10, the control modules 30, the thermal management modules 20, and the plurality of energy units 2; and the control modules 30, the thermal management modules 20, and the energy units 2 are arranged in the bin bodies 10. The bin bodies 10 include the energy bins 11 and the control bins 12, and the plurality of energy units 2 are accommodated in the energy bins 11. The thermal management modules 20 are arranged in the control bins 12, which are above the energy bin 11, of the bin bodies 10, and the control modules 30 are arranged in the control bins 12 at the ends of the bin bodies 10 in the length direction. In addition, all parts of the energy storage bins 100 are integrated in the bin bodies 10; after being transported to a site, the energy storage bins 100 can be connected to the PCS and the EMS, which is conducive to reducing workload of field assembly, improving the assembly efficiency, and facilitating customers to use. The energy storage bins 100 can be used independently, or the plurality of energy storage bins 100 are stacked together for use, thus improving the universality and application flexibility of the energy storage bins 100.v

The foregoing are only preferred embodiments of the present disclosure and are not intended to limit the present disclosure, which is subject to various changes and variations for those skilled in the art. Any modifications, equivalent replacements, improvements, etc., made within the spirit and principles of this disclosure are included in the scope of protection of this disclosure.

## Claims

1. An energy storage bin, comprising:
a bin body of which a size in a height direction is less than that of a standard container in the height direction, the size in a length direction is consistent with that of the standard container in the length direction, and the size in a width direction is consistent with that of the standard container in the width direction; and
a plurality of energy units which are accommodated in the bin body; and
control modules which are accommodated in the bin body and comprise general control modules, the general control modules being configured to perform electrical control on the plurality of energy units; wherein
the weight of the energy storage bin is less than or equal to 45 tons.

2. The energy storage bin according to claim 1, wherein the size of the bin body in the height direction is greater than or equal to one third of the size of the standard container in the height direction.

3. The energy storage bin according to claim 1, wherein the size of the bin body in the height direction is greater than or equal to one half of the size of the standard container in the height direction.

4. The energy storage bin according to claim 1 or 2, wherein the size of the bin body in the height direction is greater than or equal to one third of the size of the standard container in the height direction, and is less than half of the size of the standard container in the height direction.

5. The energy storage bin according to any one of claims 1 to 4, wherein the height of the bin body is h, 850mm ≤ h < 2896mm.

6. The energy storage bin according to claim 5, wherein 1300mm ≤ h ≤ 2400mm.

7. The energy storage bin according to any one of claims 1 to 6, wherein the energy storage bin comprises thermal management modules, and the thermal management modules are accommodated in the bin body and are configured to manage temperatures of the plurality of energy units in the energy storage bin.

8. The energy storage bin according to claim 7, wherein the bin body is internally provided with energy bins and control bins, the energy bins are configured to accommodate the plurality of energy units, and at least some of the control modules and/or at least some of the thermal management modules are accommodated in the control bins.

9. The energy storage bin according to claim 8, wherein at least some of the control bins and energy bins are arranged in the height direction of the bin body; and/or,
at least some of the control bins and energy bins are arranged in the length direction of the bin body.

10. The energy storage bin according to claim 8 or 9, wherein the thermal management modules are located on the top of the bin body; or, the thermal management modules and the energy bins are arranged in the length direction of the bin body.

11. The energy storage bin according to any one of claims 8 to 10, wherein the control modules and the energy bins are arranged in the height direction of the bin body; and/or,
the control modules and the energy bins are arranged in the length direction of the bin body.

12. The energy storage bin according to any one of claims 8 to 11, wherein the control modules and the thermal management modules are arranged in the width direction of the bin body; and/or,
the control modules and the thermal management modules are arranged in the length direction of the bin body; and/or,
the control modules and the thermal management modules are arranged in the width direction of the bin body, and the thermal management modules are arranged on front sides of the control modules; and/or,
the thermal management modules are arranged on the tops of the energy bins, and the control modules are arranged at the bottoms of the energy bins.

13. The energy storage bin according to any one of claims 8 to 12, wherein the bin bodies comprise separators;
the separators are arranged between the energy bins and the control bins, and the energy bins and the control bins share the separators; and/or,
a plurality of control bins are provided, the separators are arranged between adjacent control bins, and the adjacent control bins share the separators.

14. The energy storage bin according to claim 13, wherein the separators are filled with heat insulation media.

15. The energy storage bin according to any one of claims 8 to 14, wherein a first bin door is arranged on at least one side of the energy bins in the width direction, and a second bin door is arranged on at least one side of the control bins in the width direction.

16. The energy storage bin according to any one of claims 7 to 15, wherein a ventilation opening is formed in a top wall and/or a side wall of the bin body, and the ventilation opening is configured to perform ventilation on the thermal management modules.

17. The energy storage bin according to any one of claims 7 to 16, comprising a plurality of battery apparatuses, wherein each battery apparatus comprises a thermal management part and the plurality of energy units; and the thermal management parts are configured to regulate the temperatures of the energy units;
the thermal management modules communicate with the plurality of thermal management parts through liquid cooling pipelines, the liquid cooling pipelines comprise a main pipeline and a plurality of branch pipelines, the plurality of branch pipelines are connected to the main pipeline in parallel, the main pipeline communicates with the thermal management modules, and the plurality of branch pipelines communicate with the plurality of thermal management parts respectively; and the main pipeline is located above the plurality of battery apparatuses, or, below the plurality of battery apparatuses.

18. The energy storage bin according to any one of claims 1 to 17, wherein each control module further comprises at least one of a main control module, a power distribution module, and a fire control module.

19. The energy storage bin according to any one of claims 1 to 18, wherein the weight of the energy storage bin is M, the total weight of energy units in the bin body is M1, (M1/M) × 100% ≥ 60%.

20. The energy storage bin according to claim 19, wherein (M1/M) × 100% ≥ 80%.

21. The energy storage bin according to any one of claims 1 to 20, wherein the weight of the energy storage bin is M; the plurality of battery apparatuses are arranged in the bin body, each comprising a box and the plurality of energy units; the plurality of energy units are accommodated in the box; and the total weight of the battery apparatuses is M2, 70% ≤ (M2/M) × 100% ≤ 90%.

22. The energy storage bin according to any one of claims 1 to 21, wherein volumes of the bin bodies are V, the total volume of the energy units in the bin bodies is V1, (V1/V) × 100% ≥ 30%.

23. The energy storage bin according to claim 22, wherein (V1/V) × 100% ≥ 50%.

24. The energy storage bin according to any one of claims 1 to 23, wherein the volume of the bin body is V; the plurality of battery apparatuses are arranged in the bin body, each comprising the box and the plurality of energy units; the plurality of energy units are accommodated in the box; and the total volume of the battery apparatuses is V2, 50% ≤ (V2/V) × 100% ≤ 80%.

25. The energy storage bin according to any one of claims 1 to 24, wherein the energy of the energy storage bin is E, the size of the bin body in the length direction is a, the size of the bin body in the width direction is b, 250KW/*m* ² ≤ E/(a × b) ≤ 700KW/*m* ².

26. The energy storage bin according to claim 25, wherein 450KW/*m* ² ≤ E/(a × b) ≤ 600KW/*m* ².

27. The energy storage bin according to any one of claims 1 to 26, wherein the standard container is a 20-chi standard container, with the height of 2,896 mm, 2,591 mm or 2,438 mm.

28. The energy storage bin according to any one of claims 1 to 26, wherein the energy units are battery cells, and the weight of a single energy unit is 5-60 kg.

29. An energy storage apparatus, comprising a plurality of energy storage bins according to any one of claims 1 to 28, wherein the plurality of energy storage bins are arranged in the height direction, the length direction and/or the width direction, and each energy storage bin comprises the general control module.

30. An energy storage system, comprising a power conversion apparatus and the energy storage bin according to any one of claims 1 to 28 or the energy storage apparatus according to claim 29, wherein the power conversion apparatus is configured to electrically connect a power generation apparatus with the energy storage bin.

31. A charging network, comprising a charging pile and the energy storage bin according to any one of claims 1 to 28 or the energy storage apparatus according to claim 29 or the energy storage system according to claim 30, wherein the energy storage apparatus is configured to provide electric energy for the charging pile.
